# EUROPEAN PATENT APPLICATION

(11) **EP 2 613 575 A1**
(43) Date of publication of application: **10.07.2013**
(21) Application number: 12150427.8
(22) Date of filing: 09.01.2012
(51) Int. Cl.: H04W 4/22

(54) **A method of operating a mobile communication device**

(71) Applicant: SJB Computer Consultants Ltd., Bradford on Avon, Wiltshire BA15 2BH (GB)
(72) Inventor: Harding, Louise, Bradford on Avon, Wiltshire BA15 2BH (GB)
(74) Representative: Handsome I.P. Ltd

(57) **Abstract**

The invention allows for a message to be sent discreetly from a mobile communication device in response to an event and in particular is a method of operating a mobile communication device 110 comprising the steps of providing a mobile communication device configured to automatically send a signal, to a location remote from said mobile communication device, in response to an event, the event being the removal of a predetermined hardware device 140 attached to the mobile communication device; and removing a hardware device attached to said mobile communication device.

## Description

The present invention relates generally to a method of operating a mobile communication device and finds particular, although not exclusive, utility in the sending of alerts or alarms in the case of emergencies.

Typical panic-style alarms allow for a single button to be pressed or for a combination of buttons to be pressed, by a user such that a signal is sent to a receiving station. In the case of a single button being pressed accidental triggering may easily occur. In the case of a combination of buttons being required to be pressed, although the risk of accidental triggering is reduced, the steps required can take more time than might be available. Moreover, those steps might attract unwanted attention from, for example, an assailant.

Accordingly, it is desirable to have a method of effecting the sending of an alert, alarm or other such signal in a relatively simple and fast manner.

In a first aspect, the invention provides a method of operating a mobile communication device comprising the steps of providing a mobile communication device configured to automatically send a signal, to a destination at a location remote from said mobile communication device, in response to an event, the event being the removal of a predetermined hardware device attached to the mobile communication device; and removing a hardware device attached to said mobile communication device.

The mobile communication device may be a mobile/cell phone, a laptop, handheld computer, or other such computing device.

The hardware device may be one or more of an audio cable, an audio device, a headset, a physical connector, a lanyard, a magnetic device, a removable memory device, a microphone, a data transfer cable, a power source cable, and a camera. Other hardware devices are contemplated.

The removal of the hardware device may be automatically detected by the mobile communication device such that a predefined set of instructions is then followed to transmit the signal. The signal may be a message, such as an SMS or email instant message, telephone call, social network update or any other means of communication facilitated by the mobile communication device. The message may be predefined. Other forms of signal are contemplated such as data transmitted to a remote location such as a server. The detection of the removal of the hardware device may be by means of detecting a signal generated by the device's software platform, or by monitoring connection ports to determine if a device is connected or an electrical load or optical cable is present on the port. The monitoring may be automatic and undertaken by the mobile communication device.

The signal may be sent via one or more of a mobile telephone network, a mobile data network, a wide area network, the internet, Bluetooth (RTM), infrared, a local area network, a wireless network, and Wi-Fi (RTM) network.

The signal may be sent via a cable if the mobile communication device is connected by a cable to another telecommunication device and/or a network at the time of the event.

The destination to which the signal is sent may be predetermined, and might be one or more of a server, another telecommunication device, and a computing device. For instance, the signal may be an SMS message sent to another mobile communication device. Alternatively, the signal might be in the form of data sent to a server, the server being configured to send messages and/or signals to other destinations upon receipt of the data. The data may include the geographic location of the mobile communication device. In one embodiment, the data may be sent to a server via the mobile telephone network; the server having predefined emails and SMS messages waiting to be sent to predefined locations such as computers and other mobile communication devices on receipt of the data. Alternatively, the server may be programmed to send one or more signals to predefined locations, the one or more signals themselves being determined by the received signal from the mobile communication device. Another possibility is that the server sends one or more signals to locations not predefined but defined in response to other factors such as the received signal from the mobile communication device, the time of day and so on. In this way, a user may be able to alert a neighbour, a friend, family member, or one of the emergency services automatically, quickly and discreetly.

Accordingly, the method may further comprise the step of the server or other telecommunication device sending one or more messages as a result of receiving the signal. The one or more messages may be predefined.

In a second aspect, the invention provides a computing device arranged to operate in accordance with the method according to the first aspect. The computing device may be a mobile telecommunication device.

In a third aspect, the invention provides a computer program comprising computer program code means adapted to perform all the steps of any of the first aspect when said program is run on a computer. The computer may be a mobile telecommunication device.

In a fourth aspect, the invention provides a computer network implemented method, according to the first aspect.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

Figure 1 is a flow diagram of a method according to the invention; and

Figure 2 is a schematic drawing of a network including a mobile telecommunication device.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may refer to different embodiments. Furthermore, the particular features, structures or characteristics of any embodiment or aspect of the invention may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of simplifying the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may, in some embodiments, mean only one.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

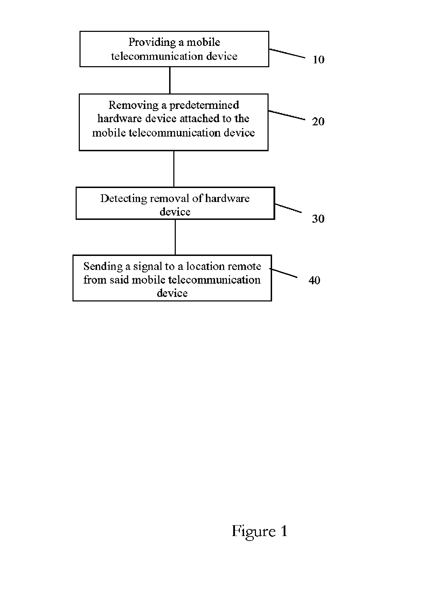

In Figure 1, a flow diagram of a method according to the invention is depicted. In step 10, a mobile telecommunication device is provided. The device is configured to operate according to the invention, as described herein. In particular, the device is configured to automatically send a signal, to a location remote from said mobile communication device, in response to an event, the event being the removal of a predetermined hardware device attached to the mobile communication device.

In step 20, a predetermined hardware device which is attached to the mobile telecommunication device is removed. The mobile telecommunication device detects, in step 30, the removal of the hardware device. In response to this detection, the mobile telecommunication device sends a signal to a location remote from itself, in step 40.

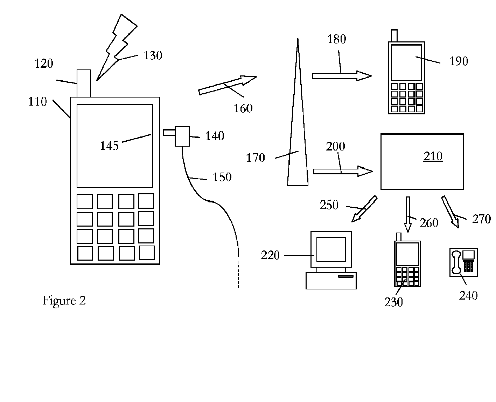

In Figure 2, a mobile telecommunication device in the form of a mobile/cell phone 110 is shown. A pair of headphones (not shown) includes a cable 150 and a plug 140 at one end thereof for connecting to the phone 110 via a standard mini-jack socket 145. In the figure, the plug 140 has been disconnected from the phone 110. The phone 110 is configured to detect this disconnection. The phone 110 may also comprise software for activating and deactivating this detection and/or for acting upon this detected disconnection or for ignoring it. In the figure, the phone 110 is activated to detect the disconnection of plug 140. It sends 160 a radio frequency signal 130 via its aerial 120 to a base station 170 forming part of the mobile phone network.

The base station 170 may be of the kind that is connected to other base stations and/or other telecommunication networks either wirelessly or by cable connection, or a combination of the two. The base station 170 may send 180 a message or signal to another mobile telecommunication device 190 directly via a radio frequency in response to receiving the signal 160 from the mobile telecommunication device 110. The message or signal may be the same as the one it received from the mobile telecommunication device 110.

Alternatively, or additionally, the base station 170 may communicate with a server 210 via signals 200. Such signals may be wireless (radio frequency) and/or via cables. The server 210 may then communicate 250, 260, 270 with other telecommunication devices such as a computer 220, a mobile telecommunication device 230, and a landline telephone 240. Other devices, such as pagers are also contemplated as being the recipient of communication from the server 210.

The server 210 may communicate with these devices 220, 230, 240 via radio frequency and/or cable connections.

The server may have access to a database including messages (predefined or otherwise), or message templates and predefined destinations associated with the received signal, such that one or more messages are sent to one or more predefined destinations.

In this way, the act of unplugging the headphones from the mobile telecommunication device 110 allows for a message to be sent to locations remote from it. The message may be predefined and take any form capable of being communicated electronically. More than one signal may be sent by the mobile telecommunication device 110. More than one onward signal or message may be sent to other remote devices.

The arrangement of all or any two devices shown in Figure 2 may be considered to be a network, a communication network, or a computer network.

## Claims

1. A method of operating a mobile communication device comprising the steps of providing a mobile communication device configured to automatically send a signal, to a destination at a location remote from said mobile communication device, in response to an event, the event being the removal of a predetermined hardware device attached to the mobile communication device; and removing a hardware device attached to said mobile communication device.

2. The method of claim 1, wherein the hardware device is one or more of an audio cable, an audio device, a headset, a physical connector, a lanyard, a magnetic device, a removable memory device, a microphone, a data transfer cable, a power source cable, and a camera.

3. The method of either one of claims 1 and 2, wherein the signal is a message.

4. The method of any preceding claim, wherein the signal is sent via one or more of a mobile telephone network, a mobile data network, a wide area network, the internet, Bluetooth (RTM), infrared, a local area network, a wireless network, and Wi-Fi (RTM) network.

5. The method of any preceding claim, wherein the destination is predetermined.

6. The method of any preceding claim, wherein the destination is one or more of a server, another telecommunication device, and a computing device.

7. The method of claim 6, further comprising the step of the one or more of said server, other telecommunication device, and computing device sending one or more messages as a result of receiving the signal.

8. A computing device arranged to operate in accordance with the method according to any one of claims 1 to 7.

9. A computing device according to claim 8, being a mobile telecommunication device.

10. A computer program comprising computer program code means adapted to perform all the steps of any of claims 1 to 7 when said program is run on a computer.

11. A computer network implemented method, according to any one of claims 1 to 7.

12. A method of operating a mobile telecommunication device, in accordance with any one of claims 1 to 7, substantially as herein before described with reference to the accompanying drawings.

13. A computing device, in accordance with either one of claims 8 and 9, substantially as herein before described with reference to the accompanying drawings.
